Europäisches Patentamt

European Patent Office

Office européen des brevets

(11) Publication number: **0 057 495**
**B1**

## EUROPEAN PATENT SPECIFICATION

(45) Date of publication of patent specification: **07.08.85**

(51) Int. Cl.⁴: **C 08 L 67/02**

(21) Application number: **82300030.2**

(22) Date of filing: **05.01.82**

(54) Reinforced poly(ethylene terephthalate) compositions.

(30) Priority: **06.01.81 US 223024**

(43) Date of publication of application:
**11.08.82 Bulletin 82/32**

(45) Publication of the grant of the patent:
**07.08.85 Bulletin 85/32**

(84) Designated Contracting States:
**BE DE FR GB IT NL SE**

(56) References cited:
**DE-A-2 856 270**
**US-A-3 639 527**
**US-A-4 172 859**
**US-A-4 187 358**

(73) Proprietor: **E.I. DU PONT DE NEMOURS AND COMPANY**
**1007 Market Street**
**Wilmington Delaware 19898 (US)**

(72) Inventor: **Ostapchenko, George Joseph**
**202 Saddler Lane**
**Wilmington Delaware 19803 (US)**

(74) Representative: **Jones, Alan John et al**
**CARPMAELS & RANSFORD 43 Bloomsbury Square**
**London, WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 057 495**

**Description**

Background of the invention

This invention relates to reinforced poly(ethylene terephthalate) compositions which can be extruded into sheets that are readily thermoformed at moderate pressures, below about 690 kPa, to give articles having well defined surface boundaries.

Polyethylene terephthalate has long been used as an injection-molding and extrusion resin for the fabrication of various articles for household or industrial use, including appliance parts, containers, and small auto parts. Because many of such articles must withstand considerable temperature changes and/or physical abuse, it is customary to blend poly(ethylene terephthalate) with other polymers which would improve its toughness and resistance to cracking.

DE—A—2 856 270 discloses a resin composition of improved dynamic properties comprising an aromatic copolyester of terephthalic acid and isophthalic acid and/or a functional derivative thereof with a bisphenol, a polyamide, and an ionomer. According to this reference, these resin compositions can be molded into various molded articles by compression molding, injection molding, extrusion molding and the like using conventional molding processes.

Additional improvement of the mechanical properties of polyethylene terephthalate is obtained by reinforcement, especially with fibrous materials, principally with glass fibers. While many types of glass fiber-reinforced poly(ethylene terephthalate) compositions are available, they require the use of high pressure injection molding techniques. Typical of such compositions are those described in U.S. Patent 4,124,561 to Phipps et al. Injection molding, normally carried out at about 20,000 to 100,000 kPa, requires considerably more energy than the conventional lower pressure operations such as, for example, thermoforming or hot sheet stamping, which are satisfactory for non-reinforced poly(ethylene terephthalate) compositions.

Accordingly, it is very desirable to make available to the industry reinforced compositions capable of being formed into sheets that can be thermoformed at lower pressures, for example, from less than about 690 kPa to about 5520 kPa.

Summary of the invention

According to this invention, there is now provided a composition consisting essentially of the following components in stated weight proportions:

(a) 50—80% of poly(ethylene terephthalate) having an inherent viscosity of more than 0.55 dl/g;

(b) 1—10% of at least one copolymer of ethylene with an ethylenically unsaturated carboxylic acid or a terpolymer of ethylene with an ethylenically unsaturated carboxylic acid and with an ester of an ethylenically unsaturated carboxylic acid or with a vinyl ester;

the proportion of the carboxylic acid monomer in the copolymer being about 2 to 20 weight percent, and the respective proportions of the carboxylic acid and of the ester in the terpolymer being about 1 to 30 weight percent of each;

said copolymer or terpolymer having 0—100% of its carboxylic groups converted to their salt form, the cation being a divalent metal ion;

with the proviso that up to about 20% of the recited component (a) can be replaced by a polymer compatible with poly(ethylene terephthalate) and selected from the class consisting of polyesters, polyamides, and polycarbonates, and that up to 40% of the recited component (b) may be replaced by a copolymer of ethylene with a vinyl ester; and

(c) 10—50% of a reinforcing material having an aspect ratio of at least 10.

For the purpose of this disclosure and claims, the term "consisting essentially" means that small amounts of other materials may be present in the above compositions in addition to the recited components, so long as they do not detract from the operability of this invention.

Detailed description of the invention

Sheets made from the compositions of the present invention have good thermoformability. For the purpose of this invention, the quality of thermoformability is judged by measuring the radius between the bottom and the wall of a molded dish, as described later in this disclosure. The better the thermoformability the closer the radius of the thermoformed dish matches the mold radius. Well formed articles can be obtained from many commercial reinforced compositions at higher pressures, but at moderate pressures the edge definition is poor. Sheets made from the compositions of the present invention, on the other hand, are capable of being molded into dishes having a radius between the bottom and the side wall less than twice that of the mold.

Suitable reinforcing materials may be fibrous or nonfibrous, for example, lamellar. They must, however, have one very small dimension relative to their largest dimension. The ratio of the largest to the smallest dimension is known as the aspect ratio. For fibers, the aspect ratio is the ratio of length to diameter (L/D). Ordinary granular or irregularly shaped particles are not suitable in this application. Suitable nonfibrous materials include, for example, glass flakes and platelets of various types of mica such as muscovite and biotite as well as of graphite.

The most important reinforcing fiber which is used in the compositions of the present invention is

2

glass fiber. Other reinforcing fibers include, for example, graphite, boron nitride, aluminum oxide, and metal whiskers, such as steel. Various organic reinforcing fibers can also be used, including various polyamides and especially Du Pont Company's high strength Kevler® polyamide fiber. However, the benefits of this invention are realized principally with mineral fiber reinforcing agents, which are hard and stiff and thus pose special problems. The reinforcing agent should have a good adhesion to the polymeric composition. A mixture of fibrous and nonfibrous reinforcing materials may be used in the same composition. The preferred amount of reinforcing material is 20—40% of the composition.

Poly(ethylene terephthalate) is a well-known commercial resin available from Goodyear Tire and Rubber Company under the trademark Cleartuff® and from Hoechst under the trademark Arnite®. The usual molding grades have fairly high inherent viscosities, which are determined according to the method described in U.S. Patent 4,172,859 to Epstein. An inherent viscosity of 0.55 dl/g corresponds to a number average molecular weight of about 17,700.

Copolymers of ethylene with an unsaturated carboxylic acid are well known. The carboxylic acid may have 3—18 carbon atoms and may be monocarboxylic or polycarboxylic but usually will not have more than two carboxyl groups. The double bond either will be located in the α-position or will be a terminal double bond. Suitable carboxylic acids include especially acrylic and methacrylic acids as well as maleic and fumaric acids. Copolymers with 3-butenoic acid, 4-pentenoic acid and similar terminally unsaturated higher acids can be used, as well as copolymers with itaconic acid or aconitic acid. Instead of a monocarboxylic acid, a monoester of maleic or fumaric acid can be used, for example monomethyl or monoethyl maleate or fumarate. These copolymers are described, for example, in the following U.S. Patents: 3,264,272, to Rees and 3,520,861 to Thomson et al. Some or all of these copolymers are commerically available from the Du Pont Company, General Electric Co., Celanese Corp., Dow Chemical Co., and Union Carbide Corp.

The preferred copolymer is a copolymer with methacrylic acid, and the preferred proportion of the acid monomer is 5 to 15% of the copolymer.

Terpolymers of ethylene with an unsaturated carboxylic acid and with an ester of an unsaturated acid or with a vinyl ester also are known. The typical esters include, for example, methyl acrylate, ethyl methacrylate, isobutyl acrylate, diethyl fumarate, dimethyl maleate and vinyl acetate. The terpolymers suitable in the process of the present invention are described, for example, in U.S. Patent 3,264,272 to Rees.

Many such terpolymers are commercially available, either from E. I. Du Pont de Nemours and Company or from other sources.

The preferred terpolymer is one where the carboxylic acid is methacrylic acid and the ester is isobutyl acrylate. The preferred proportion of the carboxylic acid and of the ester comonomer in the terpolymers is 5 to 15% of each based on the total weight of the terpolymer.

The preferred amount of the carboxylic acid copolymer or terpolymer is 3—10% of the composition.

While the addition to poly(ethylene terephthalate) of an ethylene copolymer or terpolymer usually results in some deterioration of the physical properties of the resulting molding composition, the copolymers or terpolymers of this invention, and especially the preferred copolymers or terpolymers, when used in a reinforced composition of poly(ethylene terephthalate) molding resin have only a minimal adverse effect on the physical properties of the composition. This is due to the fact that it is sufficient to add them at low levels to improve the resin's thermoformability at moderate pressures.

The carboxyl group-containing copolymers and terpolymers usually are converted at least in part to the salt form or, as it is usually expressed in the industry, are neutralized to a certain degree. Such neutralization is obtained by adding to the carboxyl group-containing polymeric material a calculated amount of a metal salt, for example, zinc acetate or magnesium acetate, and heating the mixture to a temperature below about 140°C, while thoroughly mixing the materials together. The resulting partly or completely neutralized carboxylic group-containing polymeric material is known generically as an ionomer. Some of such ionomeric materials are available commercially, for example Surlyn® ionomer resin of the Du Pont Company. Ionomers obtained by neutralization with a monovalent cation are ineffective in improving the thermoforming radius ratio. Various ionomeric materials and the methods by which they may be prepared are described, among others, in the following U.S. Patents 3,264,272 to Rees and 3,639,527 to Brinkmann et al. It is believed that the ionomers are crosslinked, at least in part, through the metal ion, thus having exceptional toughness.

The preferred compositions of this invention are those where component (a) is poly(ethylene terephthalate); component (b) is a copolymer of ethylene with an α-unsaturated carboxylic acid, especially methacrylic acid or a terpolymer with methacrylic acid and isobutyl acrylate; and component (c) is glass fiber.

Other components may also be present in the compositions of the present invention, for example, ordinary fillers, preferably not over 10% of the total weight of components (a), (b), and (c); pigments; stabilizers; and antioxidants.

This invention is now illustrated by the following examples of certain representative embodiments thereof, where all parts, proportions and percentages are by weight.

Procedure

Sheeting, 1.52 mm thick, was prepared by dry blending the ingredients and extruding with a 28 mm twin screw extruder at 280°C melt temperature through a 15.2 cm wide slot die having a 2.29 mm gap. The sheeting was quenched on a three-roll finisher (20.3 cm diameter rolls) having a 1.52 mm gap and maintained at a 50°C middle roll temperature and 20°C top and bottom roll temperature. Discs, 10.2 cm in diameter, were cut from the extruded sheeting, preheated to 120°C and thermoformed into a 1.27 cm deep dish-shaped mold heated to 140—150°C, having an outer diameter of 7.62 cm and an inner diameter of 6.67 cm. The radius between the bottom and side wall of the dish was 1.14 mm. A vacuum of about 81 kPa was applied to the space between the mold and the sheet and 690 kPa air pressure was applied to the top of the sheet. The extent to which the molded sheet matches the shape of the mold is determined by measuring the radius between the bottom and side wall of the dish and then dividing this value by the radius in the mold. This is called the thermoforming radius ratio, and a value of 1 indicates perfect thermoformability.

Effect of ionomer concentration

Sheeting was prepared as described above using the following components:

poly(ethylene terephthalate) having an inherent viscosity of 0.72 dl/g, amount as shown in the table below;

glass fiber, from Owens-Corning Corporation, 0.0095 mm diameter, 4.76 mm long chopped strand, 30% of the composition; and

a terpolymer of ethylene, methacrylic acid, and isobutyl acrylate in respective weight ratios of 80:10:10, 73% neutralized with zinc ions. Dishes were molded from this sheeting, and their thermoforming radius ratios were determined as described above. The results are given below in Table I:

TABLE 1

| Poly(ethylene terephthalate), % | Terpolymer, % | Thermoforming radius ratio |
|---|---|---|
| 70 | 0 | 8.4 |
| 69 | 1 | 5.3 |
| 67 | 3 | 3.3 |
| 65 | 5 | 2.6 |
| 63 | 7 | 2.1 |
| 60 | 10 | 1.6 |

It can be seen that as little as 1% of the ionomeric terpolymer improves the thermoforming radius ratio by a considerable margin. When the level of this additive increases to 10%, the thermoforming radius ratio is excellent.

Effect of reinforcing agent concentration and aspect ratio

The effect of reinforcing agent concentration on thermoformability is shown in Table II for three different terpolymer concentrations. In this case the reinforcing agent is glass fiber. The amounts of the components are given as weight percent of the final composition. It can be seen that it is more difficult to achieve good thermoformability as the glass fiber content increases.

TABLE II

| Amount of terpolymer | Amount of glass fiber | Thermoforming radius ratio |
|---|---|---|
| 0 | 10 | 1.0 |
| 0 | 20 | 4.0 |
| 0 | 30 | 8.4 |
| 5 | 10 | 1.0 |
| 5 | 20 | 1.0 |
| 5 | 30 | 2.6 |
| 10 | 10 | 1.0 |
| 10 | 20 | 1.0 |
| 10 | 30 | 1.6 |

This table shows, however, that the addition of the ionomeric terpolymer helps improve thermoformability even with increasing glass fiber concentration.

The effect of reinforcing agent aspect ratio is shown in Table III. In this case the composition contained either 65% of poly(ethylene terephthalate), 30% of fiber, and 5% terpolymer (same as used in the previous determinations) or 70% of poly(ethylene terephthalate), 25% of mica, and 5% of the same ionomeric terpolymer. The aspect ratio of all the reinforcing materials was estimated from the relationship established for the average fiber L/D between flex modulus, fiber content, and fiber L/D, as published by G. E. Padawer, and N. Beecher, *Poly. Eng. & Sci.,* May 1970, Vol. 10, No. 3, pp. 185—192.

TABLE III

| Reinforcing agent | Aspect ratio | Thermoforming radius ratio |
|---|---|---|
| Glass Fiber | 17 | 1.0 |
| Glass Fiber | 26 | 2.9 |
| Glass Fiber | 27 | 3.2 |
| Wollastonite Fiber | 15 | 1.0 |
| Processed Mineral Fibers | 15 | 1.0 |
| Franklin (CaSO$_4$) Fibers | 12 | 1.0 |
| Mica | 32 | 1.7 |

Effect of ionomer

Copolymers of ethylene with methacrylic acid or terpolymers with methacrylic acid and another monomer were used in compositions containing 65% of poly(ethylene terephthalate), 30% of glass fiber, and 5% of copolymer or terpolymer. In one run, a mixture of two terpolymers in a 4:1 ratio was used. The monomer ratios of these copolymers and terpolymers, their degrees of neutralization with zinc ions, and their melt indices are shown in Table IV. The above poly(ethylene terephthalate) compositions were extruded into sheets, which were thermoformed into dishes as described above. Their thermoforming radius ratios also are shown in Table IV.

## 0 057 495

### TABLE IV

| Copolymer or terpolymer (cation) | Monomer ratio | Melt index | % neut. | Thermoforming radius ratio |
|---|---|---|---|---|
| E/MA* (Zn) | 90/10 | 1.1 | 71 | 5.1 |
| E/MA* (Zn) | 89/11 | 5.0 | 57 | 4.0 |
| E/MA* (Zn) | 88/12 | 1.6 | 38 | 5.1 |
| E/MA* (Zn) | 91/9 | 4.4 | 18 | 5.6 |
| E/MA/IBA** (Zn) | 80/10/10 | 1.0 | 73 | 2.6 |
| E/MA/IBA** | 80/10/10 | 1.0 | 0 | 2.9 |
| { E/MA/IBA** (Zn), 4% | 80/10/10 | 1.0 | 73 } | 2.4 |
| { E/VAc/MA***, 1% | 71/28/1 | 6.0 | 0 } | |
| E/MA* (Na) | 85/15 | 0.9 | 15 | 11 |
| E/MA/IBA** (Na) | 80/10/10 | 1.0 | 73 | 11 |

```
 *   ethylene/methacrylic acid copolymer
 **  ethylene/methacrylic acid/isobutyl acrylate terpolymer
 *** ethylene/vinyl acetate/methacrylic acid terpolymer.
```

It can be seen from the above data that both zinc-neutralized and completely unneutralized terpolymer as well as zinc neutralized copolymer improve the thermoforming radius ratios, the terpolymer more effectively than the copolymer. By contrast, both sodium-neutralized copolymer and terpolymer are ineffective in improving the thermoforming radius ratio. If anything, they appear to have detrimental effect on the thermoforming radius ratio. These two ionomers are outside the scope of the present invention.

Effect of other copolymers or terpolymers
While the copolymers and terpolymers of this invention and the corresponding ionomers improve the thermoforming radius ratio very effectively, other copolymers and terpolymers give scattered results. Although definite improvement is seen in some cases, no improvement or a deterioration is seen in other cases. As can be seen in Table V, on weight basis, no other copolymer or terpolymer used attains the effectiveness of the terpolymer of ethylene, methacrylic acid, and isobutyl acrylate of this invention. All data were obtained for a composition containing 30% of glass fiber. The amount of poly(ethylene terephthalate) thus was equal to 70% minus the percentate of polymer added.

6

TABLE V

| Polymer added | Weight % | Thermoforming radius ratio |
|---|---|---|
| Copolyetherester A* | 5 | 6.9 |
| Copolyetherester A* | 10 | 3.8 |
| Copolyetherester B* | 5 | 9.6 |
| Copolyetherester B* | 10 | 5.8 |
| Copolyetherester C* | 5 | 11 |
| Ethylene/Vinyl Acetate Copolymer* | 10 | 4.7 |
| Ethylene/Methacrylic acid/ monoethyl maleate terpolymer* | 10 | 8.9 |
| Acrylic copolymer** | 10 | 8.0 |
| E/MA/iBA (Zn) see Table IV | 5 | 2.6 |
| E/MA/iBA* see Table IV | 5 | 2.9 |

\* E. I. du Pont de Nemours and Company
\*\* Rohm and Haas Company

**Claims**

1. A thermoformable composition consisting essentially of the following components in stated weight proportions:
    (a) 50—80% of poly(ethylene terephthalate) having an inherent viscosity of more than 0.55 dl/g;
    (b) 1—10% of at least one copolymer of ethylene with an ethylenically unsaturated carboxylic acid or a terpolymer of ethylene with an ethylenically unsaturated carboxylic acid and with an ester of an ethylenically unsaturated carboxylic acid or with a vinyl ester;
    the proportion of the carboxylic acid monomer in the copolymer being about 2 to 20 weight percent, and the respective proportions of the carboxylic acid and of the ester in the terpolymer being about 1 to 30 weight percent of each;
    said copolymer or terpolymer having 0—100% of its carboxylic groups converted to their salt form, the cation being a divalent metal ion;
    with the proviso that up to about 20% of the recited component (a) can be replaced by a polymer compatible with poly(ethylene terephthalate) and selected from the class consisting of polyesters, polyamides, and polycarbonates, and that up to 40% of the recited component (b) may be replaced by a copolymer of ethylene with a vinyl ester; and
    (c) 10—50% of a reinforcing material having an aspect ratio (aspect ratio is the ratio of the largest to the smallest dimension) of at least 10.
2. A composition of Claim 1 wherein component (b) is a copolymer of ethylene with an ethylenically unsaturated carboxylic acid.
3. A composition of Claim 2 wherein the carboxylic acid is methacrylic acid.
4. A composition of Claim 3 wherein the proportion of methacrylic acid is 5—15% of the weight of the copolymer.
5. A composition of Claim 1 wherein component (b) is a terpolymer of ethylene with an ethylenically unsaturated carboxylic acid and an ester of an ethylenically unsaturated carboxylic acid.
6. A composition of Claim 5 wherein the terpolymer is a terpolymer of ethylene with methacrylic acid and with isobutyl acrylate.
7. A composition of Claim 6 wherein the proportions of methacrylic acid and of isobutyl acrylate are 5—15 percent of each based on the weight of the terpolymer.
8. A composition of any one of Claims 1 to 7 wherein the reinforcing material is a mineral fiber.
9. A composition of Claim 8 wherein the amount of mineral fiber is 20—40 weight percent.
10. A composition of Claim 9 wherein the mineral fiber is glass fiber.
11. A composition of Claim 10 wherein the average length/diameter ratio of glass fiber is 17 to 27.

12. A composition of any one of Claims 1 to 7 wherein the reinforcing material is mica.

13. A composition of any one of Claims 1 to 12 wherein the amount of component (b) is 3 to 10 weight percent.

14. In a process for thermoforming articles from sheets of a poly(ethylene terephthalate) composition at a pressure of 690 kPa or below, the improvement of using sheets made of a composition consisting essentially of the following components in stated weight proportions:

(a) 50—80% of poly(ethylene terephthalate) having an inherent viscosity of more than 0.55 dl/g;

(b) 1—10% of at least one copolymer of ethylene with an ethylenically unsaturated carboxylic acid or a terpolymer of ethylene with an ethylenically unsaturated carboxylic acid and with an ester of an ethylenically unsaturated carboxylic acid or vinyl ester;

the proportion of the carboxylic acid monomer in the copolymer being about 2 to 20 weight percent, and the respective proportions of the carboxylic acid and of the ester in the terpolymer being about 1 to 30 weight percent of each;

said copolymer of terpolymer having 0—100% of its carboxylic groups converted to their salt form, the cation being a divalent metal ion;

with the proviso that up to about 20% of the recited component (a) can be replaced by a polymer compatible with poly(ethylene terephthalate) and selected from the class consisting of polyesters, polyamides, and polycarbonates, and that up to 40% of the recited component (b) may be replaced by a copolymer of ethylene with a vinyl ester; and

(c) 10—50% of a reinforcing material having an aspect ratio (aspect ratio is the ratio of the largest to the smallest dimension) of at least 10.

15. The process of Claim 14 wherein component (b) of the poly(ethylene terephthalate) composition is a copolymer of ethylene with an ethylenically unsaturated carboxylic acid, the proportion of the carboxylic acid in the copolymer being 5—15 weight percent.

16. The process of Claim 14 wherein component (b) of the poly(ethylene terephthalate) composition is a terpolymer of ethylene with an ethylenically unsaturated carboxylic acid and an ester of an ethylenically unsaturated carboxylic acid, the proportion of each comonomer other than ethylene being 5—15% of the terpolymer weight.

17. The process of any one of Claims 14 to 16 wherein the reinforcing material is a mineral fiber.

18. The process of Claim 17 wherein the fiber is glass fiber.

19. A thermoformable sheet made from a composition of any one of Claims 1 to 13.

20. An article thermoformed by the process of any one of Claims 14 to 16.

**Patentansprüche**

1. Warmformbare Zusammensetzung, bestehend im wesentlichen aus den folgenden Komponenten in den angegebenen Gewichtsverhältnissen:

(a) 50 bis 80 % Poly(ethylenterephthalat) mit einer logarithmischen Viskositätszahl von mehr als 0,55 dl/g;

(b) 1 bis 10 % wenigstens eines Copolymerisats von Ethylen mit einer ethylenisch ungesättigten Carbonsäure oder eines Terpolymerisats von Ethylen mit einer ethylenisch ungesättigten Carbonsäure und mit einem Ester einer ethylenisch ungesättigten Carbonsäure oder mit einem Vinyl-Ester, wobei der Anteil des Carbonsäure-Monomers in dem Copolymerisat etwa 2 bis 20 Gew.-% beträgt und die jeweiligen Anteile der Carbonsäure und des Esters in dem Terpolymerisat jeweils etwa 1 bis 30 Gew.-% betragen, wobei 0 bis 100 % der Carboxyl-Gruppen des Copolymerisats oder Terpolymerisats in ihre Salz-Form überführt sind, wobei das Kation ein zweiwertiges Metall-Ion ist, mit den Maßgaben, daß bis zu etwa 20 % der genannten Komponente (a) durch ein mit Poly(ethylenterephthalat) verträgliches und aus der aus Polyestern, Polyamiden und Polycarbonaten bestehenden Klasse ausgewähltes Polymer ersetzt sein können und daß bis zu 40 % der genannten Komponente (b) durch ein Copolymerisat von Ethylen mit einem Vinylester ersetzt sein können, und

(c) 10 bis 50 % eines Verstärkungsmaterials mit einem Aspekt-Verhältnis (das Aspekt-Verhältnis ist das Verhältnis der größten zu der kleinsten Abmessung) von wenigstens 10.

2. Zusammensetzung nach Anspruch 1, dadurch gekennzeichnet, daß die Komponente (b) ein Copolymerisat von Ethylen mit einer ethylenisch ungesättigten Carbonsäure ist.

3. Zusammensetzung nach Anspruch 2, dadurch gekennzeichnet, daß die Carbonsäure Methacrylsäure ist.

4. Zusammensetzung nach Anspruch 3, dadurch gekennzeichnet, daß der Anteil der Methacrylsäure 5 bis 15 % des Gewichts des Copolymerisats beträgt.

5. Zusammensetzung nach Anspruch 1, dadurch gekennzeichnet, daß die Komponente (b) ein Terpolymerisat von Ethylen mit einer ethylenisch ungesättigten Carbonsäure und mit einem Ester einer ethylenisch ungesättigten Carbonsäure ist.

6. Zusammensetzung nach Anspruch 5, dadurch gekennzeichnet, daß das Terpolymerisat ein Terpolymerisat von Ethylen mit Methacrylsäure und mit Isobutylacrylat ist.

7. Zusammensetzung nach Anspruch 6, dadurch gekennzeichnet, daß die Anteile der Methacrylsäure und des Isobutylacrylats jeweils 5 bis 15 %, bezogen auf das Gewicht des Terpolymerisats, betragen.

8. Zusammensetzung nach irgendeinem der Ansprüche 1 bis 7, dadurch gekennzeichnet, daß das Verstärkungsmaterial eine Mineralfaser ist.

9. Zusammensetzung nach Anspruch 8, dadurch gekennzeichnet, daß die Menge der Mineralfaser 20 bis 40 Gew.-% beträgt.

10. Zusammenzetzung nach Anspruch 9, dadurch gekennzeichnet, daß die Mineralfaser Glasfaser ist.

11. Zusammensetzung nach Anspruch 10, dadurch gekennzeichnet, daß das mittlere Verhältnis Länge/Durchmesser der Glasfaser 17 bis 27 beträgt.

12. Zusammensetzung nach irgendeinem der Ansprüche 1 bis 7, dadurch gekennzeichnet, daß das Verstärkmungsmaterial Glimmer ist.

13. Zusammensetzung nach irgendeinem der Ansprüche 1 bis 12, dadurch gekennzeichnet, daß die Menge der Komponente (b) 3 bis 10 Gew.-% beträgt.

14. Verfahren zum Warmformen von Gegenständen aus Folien aus einer Poly(ethylenterephthalat)-Zusammensetzung bei einem Druck von 690 kPa oder weniger, dadurch gekennzeichnet, daß Folien aus einer Zusammensetzung, die im wesentlichen aus den folgenden Komponenten in den angegebenen Gewichtsverhältnissen besteht, verwendet werden:

(a) 50 bis 80 % Poly(ethylenterephthalat) mit einer logarithmischen Viskositätszahl von mehr als 0,55 dl/g;

(b) 1 bis 10 % wenigstens eines Copolymerisats von Ethylen mit einer ethylenisch ungesättigten Carbonsäure oder eines Terpolymerisats von Ethylen mit einer ethylenisch ungesättigten Carbonsäure und mit einem Ester einer ethylenisch ungesättigten Carbonsäure oder mit einem Vinyl-Ester, wobei der Anteil des Carbonsäure-Monomers in dem Copolymerisat etwa 2 bis 20 Gew.-% beträgt und die jeweiligen Anteile der Carbon säure und des Esters in dem Terpolymerisat jeweils etwa 1 bis 30 Gew.-% betragen, wobei 0 bis 100 % der Carboxyl-Gruppen des Copolymerisats oder Terpolymerisats in ihre Salz-Form überführt sind, wobei das Kation ein zweiwertiges Metall-Ion ist, mit den Maßgaben, daß bis zu etwa 20 % der genannten Komponente (a) durch ein mit Poly(ethylenterephthalat) verträgliches und aus der aus Polyestern, Polyamiden und Polycarbonaten bestehenden Klasse ausgewähltes Polymer ersetzt sein können und daß bis zu 40 % der genannten Komponente (b) durch ein Copolymerisat von Ethylen mit einem Vinylester ersetzt sein können, und

(c) 10 bis 50 % eines Verstärkungsmaterials mit einem Aspekt-Verhältnis (das Aspekt-Verhältnis ist das Verhältnis der größten zu der kleinsten Abmessung) von wenigstens 10.

15. Verfahren nach Anspruch 14, dadurch gekennzeichnet, daß die Komponente (b) des Poly(ethylenterephthalats) ein Copolymerisat von Ethylen mit einer ethylenisch ungesättigten Carbonsäure ist, wobei der Anteil der Carbonsäure in dem Copolymerisat 5 bis 15 Gew.-% beträgt.

16. Verfahren nach Anspruch 14, dadurch gekennzeichnet, daß die Komponente (b) des Poly(ethylenterephthalats) ein Terpolymerisat von Ethylen mit einer ethylenisch ungesättigten Carbonsäure und mit einem Ester einer ethylenisch ungesättigten Carbonsäure ist, wobei die Anteile jedes von Ethylen verschiedenen Comonomers jeweils 5 bis 15 % des Gewichts des Terpolymerisats, beträgt.

17. Zusammensetzung nach irgendeinem der Ansprüche 14 bis 16, dadurch gekennzeichnet, daß das Verstärkungsmaterial eine Mineralfaser ist.

18. Zusammensetzung nach Anspruch 17, dadurch gekennzeichnet, daß die Mineralfaser Glasfaser ist.

19. Warmformare Folie, hergestellt aus einer Zusammensetzung nach irgendeinem der Ansprüche 1 bis 13.

20. Warmgeformter Gegenstand, hergestellt mittels des Verfahrens nach irgendeinem der Ansprüche 14 bis 16.

## Revendications

1. Une composition thermoformable constituée essentiellement des constituants suivants, dans les proportions pondérales indiquées:

(a) 50—80 % de poly(téréphtalate d'éthylène) ayant une viscosité inhérente de plus de 0,55 dl/g,

(b) 1—10 % d'au moins un copolymère d'éthylène avec un acide carboxylique éthylèniquement insaturé ou un terpolymère d'éthylène avec un acide carboxylique éthylèniquement insaturé et avec un ester d'acide carboxylique éthylèniquement insaturé ou avec un ester vinylique;

la proportion du monomère acide carboxylique dans le copolymère étant d'environ 2 à 20 pour cent en poids, et les proportions respectives de l'acide carboxylique et de l'ester dans le terpolymère étant d'environ 1 à 30 pour cent en poids de chaque;

ledit copolymère ou terpolymère ayant 0—100 % de ses groupes carboxyliques convertis en leur forme saline, le cation étant un ion de métal divalent;

avec les conditions que jusqu'à environ 20 % du constituant (a) mentionné peuvent être remplacés par un polymère compatible avec le poly(téréphtalate d'éthylène) et choisi dans la classe constituée des polyesters, polyamides et polycarbonates, et que jusqu'à 40 % du constituant (b) mentionné peuvent être remplacés par un copolymère de l'éthylène avec un ester vinylique; et

(c) 10—50 % d'une matière renforçante ayant un rapport d'aspect (le rapport d'aspect est le rapport de la dimension la plus grande à la dimension la plus petite) d'au moins 10.

2. Une composition selon la revendication 1, dans laquelle le constituant (b) est un copolymère de l'éthylène avec un acide carboxylique éthylèniquement insaturé.

3. Une composition selon la revendication 2, dans laquelle l'acide carboxylique est l'acide méthacrylique.

4. Une composition selon la revendication 3, dans laquelle la proportion d'acide méthacrylique est de 5—15 % du poids du copolymère.

5. Une composition selon la revendication 1, dans laquelle le constituant (b) est un terpolymère de l'éthylène avec un acide carboxylique éthylèniquement insaturé et un ester d'un acide carboxylique éthylèniquement insaturé.

6. Une composition selon la revendication 5, dans laquelle le terpolymère est un terpolymère de l'éthylène avec de l'acide méthacrylique et de l'acrylate d'isobutyle.

7. Une composition selon la revendication 6, dans laquelle les proportions d'acide méthacrylique et d'acrylate d'isobutyle sont de 5—15 pour cent de chaque relativement au poids du terpolymère.

8. Une composition selon l'une quelconque des revendications 1 à 7, dans laquelle la matière renforçante est une fibre minérale.

9. Une composition selon la revendication 8, dans laquelle la quantité de fibre minérale est de 20—40% en poids.

10. Une composition selon la revendication 9, dans laquelle la fibre minérale est de la fibre de verre.

11. Une composition selon la revendication 10, dans laquelle le rapport moyen longueur/diamètre de la fibre de verre est de 17 à 27.

12. Une composition selon l'une quelconque des revendications 1 à 7, dans laquelle la matière renforçante est du mica.

13. Une composition selon l'une quelconque des revendications 1 à 12, dans laquelle la quantité de constituant (b) est de 3 à 10 % en poids.

14. Dans un procédé de thermoformage d'articles à partir de feuilles d'une composition de poly(téréphtalate d'éthylène) à une pression de 690 kPa ou en-dessous, le perfectionnement consistant à utiliser des feuilles formées d'une composition constituée essentiellement des constituants suivants dans les proportions pondérales indiquées:

(a) 50—80 % de poly(téréphtalate d'éthylène) ayant une viscosité inhérente de plus de 0,55 dl/g,

(b) 1—10 % d'au moins un copolymère d'éthylène avec un acide carboxylique éthylèniquement insaturé ou un terpolymère d'éthylène avec un acide carboxylique éthylèniquement insaturé et avec un ester d'acide carboxylique éthylèniquement insaturé ou avec un ester vinlylique;

la proportion du monomère acide carboxylique dans le copolymère étant d'environ 2 à 20 pour cent en poids, et les proportions respectives de l'acide carboxylique et de l'ester dans le terpolymère étant d'environ 1 à 30 pour cent en poids de chaque;

ledit copolymère ou terpolymère ayant 0—100 % de ses groupes carboxyliques convertis en leur forme. saline, le cation, étant un ion de métal divalent;

avec les conditions que jusqu'à environ 20 % du constituant (a) mentionné peuvent être remplacés par un polymère compatible avec le poly(téréphtalate d'éthylène) et choisi dans la classe constituée des polyesters, polyamides et polycarbonates, et que jusqu'à 40% du constituant (b) mentionné peuvent être remplacés par un copolymère de l'éthylène avec un ester vinylique; et

(c) 10—50 % d'une matière renforçante ayant un rapport d'aspect (le rapport d'aspect est le rapport de la dimension la plus grande à la dimension la plus petite) d'au moins 10.

15. Le procédé de la revendication 14, dans lequel le constituant (b) de la composition de poly(téréphtalate d'éthylène) est un copolymère de l'éthylène avec un acide carboxylique éthylèniquement insaturé; la proportion d'acide carboxylique dans le copolymère étant de 5—15% en poids.

16. Le procédé de la revendication 14, dans lequel le constituant (b) de la composition de poly(téréphtalate d'éthylène) est un terpolymère de l'éthylène avec un acide carboxylique éthylèniquement insaturé et un ester d'un acide carboxylique éthylèniquement insaturé, la proportion de chaque comonomère, autre que l'éthylène, étant de 5—15% du poids du terpolymère.

17. Le procédé de l'une quelconque des revendications 14 à 16, dans lequel la matière renforcante est une fibre minérale.

18. Le procédé de la revendication 17, dans lequel la fibre est de la fibre de verre.

19. Une feuille thermoformable constituée d'une composition selon l'une quelconque des revendications 1 à 13.

20. Un article thermoformé par le procédé de l'une quelconque des revendications 14 à 16.